(19)

Europäisches Patentamt

European Patent Office

Office européen des brevets

(11) **EP 2 620 950 A1**

(12) **EUROPEAN PATENT APPLICATION**
published in accordance with Art. 153(4) EPC

(43) Date of publication:
31.07.2013 Bulletin 2013/31

(21) Application number: 10857531.7

(22) Date of filing: 22.09.2010

(51) Int Cl.:
*G21G 4/08* (2006.01)     *B01D 15/00* (2006.01)
*B01J 41/04* (2006.01)     *B01J 49/00* (2006.01)

(86) International application number:
PCT/JP2010/066434

(87) International publication number:
WO 2012/039037 (29.03.2012 Gazette 2012/13)

(84) Designated Contracting States:
AL AT BE BG CH CY CZ DE DK EE ES FI FR GB GR HR HU IE IS IT LI LT LU LV MC MK MT NL NO PL PT RO SE SI SK SM TR

(71) Applicant: National Institute of Radiological Sciences
Chiba-shi, Chiba 263-8555 (JP)

(72) Inventors:
• TAGAMI, Keiko
Chiba-shi, Chiba 263-8555 (JP)

• UCHIDA, Shigeo
Chiba-shi, Chiba 263-8555 (JP)
• NAGATSU, Koutaro
Chiba-shi, Chiba 263-8555 (JP)
• FUJIBAYASHI, Yasuhisa
Chiba-shi, Chiba 263-8555 (JP)

(74) Representative: Twelmeier Mommer & Partner
Patent- und Rechtsanwälte
Westliche Karl-Friedrich-Strasse 56-68
75172 Pforzheim (DE)

(54) **METHOD AND DEVICE FOR SEPARATING TECHNETIUM FROM TECHNETIUM-CONTAINING MOLYBDENUM AND PURIFYING SAME, AND METHOD AND DEVICE FOR RECOVERING MOLYBDENUM**

(57) Technetium-containing molybdenum is dissolved in a solvent so as to make a solution. The solution passes through a first column. The first column is loaded with an extraction chromatographic resin. The solution, which has passed through, including molybdenum and a solution, which is used for cleaning the first column, are mixed together as necessary to recover molybdenum. Subsequently, the first column allows an acid solution to pass through so as to elute technetium from the extraction chromatographic resin for recovery. This allows, for example, supplying Tc-99m alone separated from a target material turned into a solution after production using $^{100}Mo(p,2n)^{99m}Tc$.

Fig. 11

EP 2 620 950 A1

## Description

TECHNICAL FIELD

The present invention relates to a method and apparatus for separating and purifying technetium from technetium-containing molybdenum, and a method and apparatus for recovering molybdenum. Especially, the present invention relates to, for example, a method and apparatus for separating and purifying technetium from technetium-containing molybdenum that allow supplying technetium 99m (Tc-99m) alone separated from target material, which is turned into solution, using a combination of ion-exchange resin and appropriate cleaning and recovery solutions after production using $^{100}Mo(p,2n)^{99m}Tc$, and are applicable in clinical use. The present invention also relates to a method and apparatus for recovering molybdenum that allow efficiently recovering molybdenum using these method and apparatus.

BACKGROUND ART

Technetium 99m (Tc-99m with a half-life of six hours), which is used in fields of nuclear medicine and image diagnosis worldwide, has a percentage of equal to or more than 70 percent of radioisotopes used for nuclear medicine, and is a major player. Molybdenum 99 (Mo-99 with a half-life of 66 hours) generates Tc-99m along with decay of Mo-99, and is a radioisotope called a parent nuclide of aforementioned Tc-99m. A commercially available apparatus (a Mo-99/Tc-99m generator) selectively recovers Tc-99m that is generated by adsorbing Mo-99 to a support such as alumina, or by similar method (for example, see Patent Document 1).

Patent Document 2 discloses a Tc-99m generator system that includes a sorbent column loaded with a composition containing Mo-99.

Non-Patent Documents 1 and 2 disclose techniques that separate technetium using TEVA (registered trademark) resin by Eichrom Industries, Inc.

Non-Patent Documents 3 and 4 disclose that a trace of Mo can be removed from technetium using TEVA resin.

Patent Document 1: JP-T-2006-500553
Patent Document 2: JP-T-2002-527031

Non-Patent Document 1: UCHIDA, TAGAMI, FUJIKAWA "A Fundamental Study for the Chemical Separation of Technetium by TEVA - Spec Resin." Radioisotopes 45, 784-787(1966)
Non-Patent Document 2: S. Uchida & K. Tagami "A Rapid Separation Method for Determination of Tc-99 in Environmental Waters by ICP-MS" Radioactivity and Radiochemistry, Vol. 10, No. 2, 23-29 (1999)
Non-Patent Document 3: K. Tagami & S. Uchida, "Comparison of the TEVA - Spec resin and liquid-liquid extraction methods for the separation of technetium in soil samples" Journal of Radioanalytical and Nuclear Chemistry, 239, 643-648 (1999)
Non-Patent Document 4: K. Tagami, "Study on analysis of Tc-99 in environmental samples and understanding environmental behavior" Radiochemistry News. Vol. 8, 3-8 (29 Aug. 2003)
Non-Patent Document 5: K. Tagami & S. Uchida, "Separation of rhenium by an extraction chromatographic resin for determination by inductively coupled plasma-mass spectrometry" Analytica Chimica Acta 405, 227-229 (2000)

DISCLOSURE OF THE INVENTION

PROBLEMS TO BE SOLVED BY THE INVENTION

Japan relies on imports for all Mo-99. Nowadays, Mo-99 is in short supply worldwide while a research and development project for RI production proceeds in Japan.

This applicant is uniquely developing a method that separates and supplies Tc-99m alone after production using $^{100}Mo(p,2n)^{99m}Tc$.

However, molybdenum is harmful to a human body. Therefore, in order to administer Tc-99m to a human being, it is preferred to separate and purify Tc-99m, and remove molybdenum to have sufficiently low concentration (approximately one ppm).

However, Patent Document 1, Non-Patent Documents 1 and 2 disclose techniques that are not related to a separation of technetium from molybdenum, but a concentration of technetium.

Non-Patent Documents 3 and 4 disclose techniques where a trace of Mo is one of various coexisting elements.

These techniques are completely different from a separation of Tc from Mo according to the present invention where the major element is Mo.

In contrast, Patent Document 2 discloses a configuration similar to that of the present invention. However, the column at the first stage is used for eluting technetium with salt solution from the column on which molybdenum adsorbing material is loaded, and does not allow molybdenum to flow out while trapping technetium unlike the present invention. The column at the second stage is used for removing molybdenum and concentrating technetium. This column is not easy to handle because this uses reductive-complexing agent (including EDA).

The present invention has been made to solve the above-described problems, and it is a first object of the present invention to separate and purify Tc-99m from technetium-containing molybdenum, which is, for example, a target material produced using $^{100}$Mo(p,2n)$^{99m}$Tc, and to reduce concentration of harmful Mo, which hinders labeling of Tc-99m, to a level where Tc-99m can be administered to a human being.

It is a second object of the present invention to recycle a target material, which is Mo-100.

SOLUTIONS TO THE PROBLEMS

The inventors examined a method for separating Tc-99m using rhenium Re, which has a similar chemical property, instead of Tc when Tc-99m is decomposed from a target element of Mo, so as to separate and supply Tc-99m produced by using $^{100}$Mo(p,2n)$^{99m}$Tc.

Specifically, an amount of Mo-100 is planned to be 100 to 500 mg. Therefore, examination was carried out under the following experimental condition.

(Condition-1)

Mo powder of 100 to 500 mg was dissolved in hydrogen peroxide solution $H_2O_2$ of 3 to 5 mL. Subsequently, ultrapure Re solution (ReO$_4^-$, 1000mg-Re/L in $H_2O$) of 40 to 500 $\mu$L was added. After sufficiently stirring, TEVA resin column (produced by Eichrom Industries, Inc.) was used for separation. Consequently, a removal rate of Mo and a recovery rate of Re was obtained with an inductively coupled plasma optical emission spectrometry (ICP-OES).

(Condition-2)

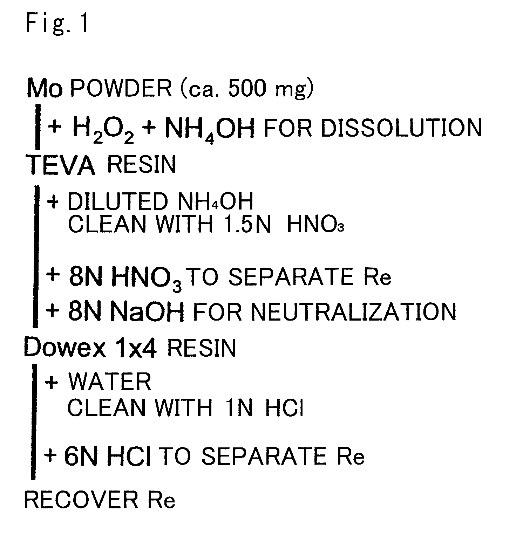

As illustrated in FIG. 1, Mo powder of 500 mg was dissolved in hydrogen peroxide solution $H_2O_2$ and ammonia solution NH$_4$OH. After adding Re and sufficiently stirring, Re was separated using TEVA resin column. Additionally, Dowex (registered trademark) 1x4 by Dow Chemical Company was used for removing Mo remaining after the removal with TEVA resin column. Consequently, Re was recovered using 6 N hydrochloric acid HCl.

In order to determine these analysis conditions, targets to be achieved are as follows.

> i. Finally, Mo must be removed to decrease the concentration of Mo to be sufficiently low concentration (approximately one ppm) so as to enable administration of Tc-99m to a human being.
> ii. Since nitric acid (HNO3) is dangerous to a human body, a final solution is hydrochloric acid.
> iii. Additionally, recovery employs a solvent as simple as possible to recycle the target of Mo-100.

As performed in Condition-1, dissolving Mo powder in $H_2O_2$ shows an acidic property of the sample solution. After the solution directly passed through the TEVA resin, 100% of Re was sorbed on the resin while 65 to 80% of Mo also remained on the resin. Subsequently, 0.5 to 1.5 N nitric acid is cleaned with the column. This showed that Mo and eluent of Re flowed out at approximately the same time. That is, Mo and Re can not be separated under this condition. Therefore, Tc and Mo can not be also separated.

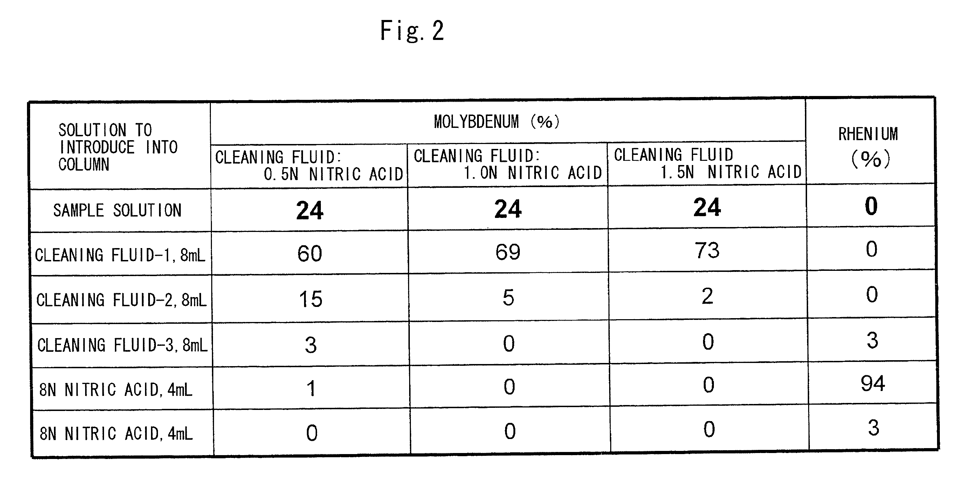

FIG. 2 illustrates an examination result where Mo metal powder of 100 mg was dissolved in $H_2O_2$ water (35%) of 4 mL, ReO$_4^-$ of 0.04 mg was added, and then possibility of separation using TEVA resin was examined. FIG. 2 indicates that Re has high sorption capability on TEVA resin even with a large amount of Mo. In the case of dissolution in $H_2O_2$, a part of molybdenum possibly turns into HMoO4$^-$, which is sorbed on the resin similarly to Re. This does not allow separation only by introducing the sample. However, cleaning the column using 0.5 to 1.5 N nitric acid elutes Mo. The value of 1.5 N provides the highest effect (in the case where the normality is higher than this, Re is eluted. However, since sorption capability of Tc is higher than that of Re, cleaning effect of 1.5 N is expected, and cleaning fluid of 1.5 N can be selected.)

In Condition-2, NH$_4$OH is added in addition to $H_2O_2$, which produces alkaline solution. When the inventors used Tc to examine sorption on TEVA resin under a condition with NaOH, a recovery rate of Tc was 100%, and Tc was able to be recovered from a solution with high salt concentration (see Non-Patent Document 1). Since Re has a similar behavior to that of Tc on TEVA resin (Non-Patent Document5), a high recovery rate is expected similarly to that of Tc.

An actual recovery rate of Re using TEVA resin was 99 ± 1%.

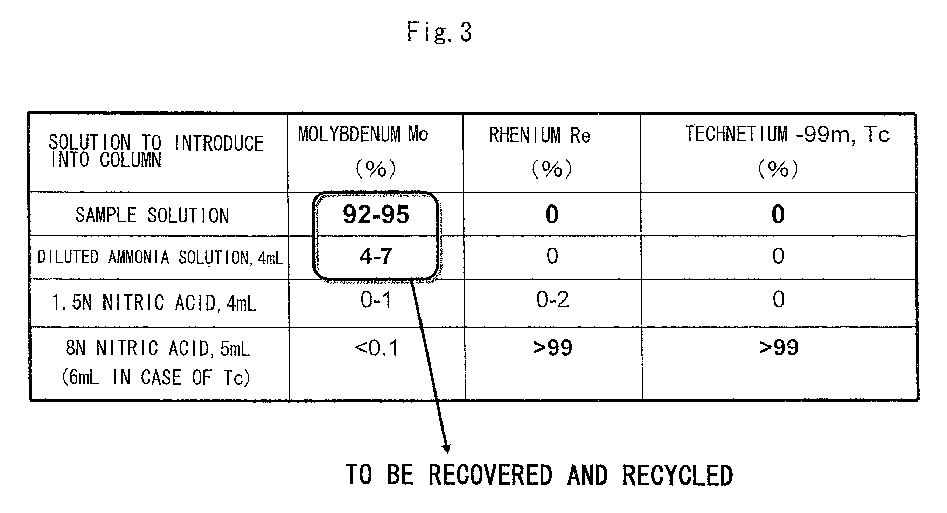

FIG. 3 indicates an examination result where Mo metal powder of 500 mg was dissolved in 10 mL of $H_2O_2$ water (35%) and 10 mL of $NH_4OH$ water (30%), then ReO4- of 0.4 mg/$^{99m}$TcO4- was added, and TEVA resin was used to examine the recovery rate. According to FIG. 3, when the amount of sample solution reduces (3 to 4 mL), the recovery rate of Mo passing the column becomes about 75%. This may be caused due to an amount of solution remaining inside the column. Actually, in the case where diluted ammonia solution or pure water of approximately 4 mL is used to clean the column, the recovery rate is approximately 22 to 24%. In either case, a sum of drained sample liquid and cleaning fluid ensures the recovery rate of equal to or more than 98%.

The aforementioned separation method using the extraction chromatographic resin (such as TEVA resin) is summed up as follows.

1. At introduction: In the case where mixed solution of ammonia solution and hydrogen peroxide solution passes through TEVA resin, Tc (Re) remains on the resin while Mo passes through.
2. Cleaning fluid : Diluted ammonia solution and 1.5 N nitric acid are employed. The diluted ammonia solution is recycled with the aforementioned column eluate. The 1.5 N nitric acid is employed since its Mo removal efficiency is comparatively high.
3. Eluent: 8 N nitric acid allows eluting Tc (Re) with a recovery rate of approximately 100%.

Although this method allows removing most of Mo, it is necessary to further remove Mo for administration to a human body. Since the nitric acid solution has difficulty in operation after separation, solution property of hydrochloric acid is preferred.

In contrast, removal and recovery of Mo in this condition allows 94% to pass the column while cleaning the column with diluted $NH_4OH$ solution allows recovering equal to or more than 98%. However, 0.1% (approximately 0.5 mg) of total amount is confirmed to be finally contained in Re (Tc) eluent. When anion ion-exchange resin is used for further purification, Mo finally mixed with Re (Tc) eluent is confirmed to be less than 1 μg with the inductively coupled plasma mass spectrometry (ICP-MS).

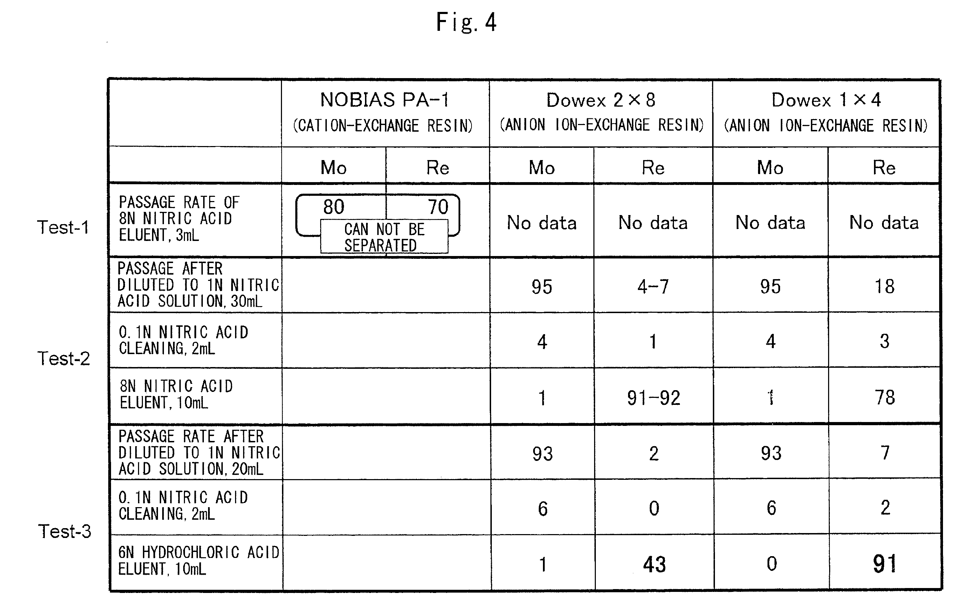

FIG. 4 illustrates test results of removal of Mo using ion-exchange resin and recovery of Re (a substitute for Tc). As FIG. 4 makes clear, cation-exchange resin can not hold Re and allows Re to pass through, the cation-exchange resin is not applicable. While anion ion-exchange resin of Dowex 2x8 allows Mo to pass through and holds Re in a good condition, Dowex 2x8 has difficulty in recovery using hydrochloric acid. While Dowex 1x4 allows Mo to pass through in a better condition, Dowex 2x8 holds Re in a better condition than that of Dowex 1x4. However, Dowex 1x4 allows recovery using hydrochloric acid, and Tc has a higher selectivity to anion resin. Thus, Dowex 1x4 is expected to hold Tc. In contrast, Dowex 2x8 using hydrochloric acid eluted a small proportion of Re. Thus, this may have a more difficulty in elution of Tc. Therefore, Dowex 1x4 was selected.

This method applied to Tc-99m provided yields of equal to or more than 85%.

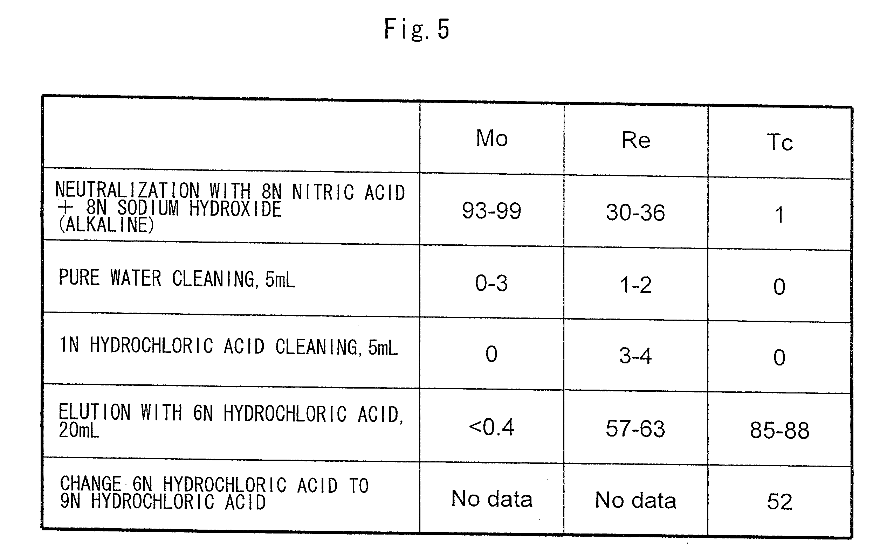

FIG. 5 illustrates test results of recovery rate of Re (a substitute for Tc) using Dowex 1x4 and removal of Mo. As FIG. 5 makes clear, making solution slightly alkaline after neutralization elutes almost all Mo. Additionally, cleaning the column with pure water removes most of remaining Mo. As already known, the result shows that Re has lower sorption strength on the anion column than that of Tc. Tc is extracted well with the column, and then equal to or more than 85% of Tc can be eluted. However, increasing the normality of hydrochloric acid from 6 N to 9 N does not have an elution effect.

The aforementioned test results of removal of Mo with selecting ion-exchange resins are summed up as follows.

1. Case of cation-exchange resin: When TEVA eluent (after pretreatment as needed) passes through, Mo is extracted with the resin. Therefore, passage of Tc allows removal of Mo.
2. Case of anion ion-exchange resin: When the TEVA eluent (after pretreatment as needed) passes through, Tc is extracted with the resin. Therefore, passage of Mo allows removal of Mo.
3. From the view point of removal of organic matter inside the TEVA eluent, obtaining the effect of the anion ion-exchange resin passing through the organic matter provides a higher possibility for administration to human body.

Points of observation of the present invention on Non-Patent Documents 3 and 4 are as follows. In the case where there is an overwhelmingly larger amount of Mo than that of ambient level, it has been unknown whether Tc is extracted with TEVA resin. However, Tc was confirmed to be extracted while Mo was confirmed to pass through the resin. Additionally, using this point, recycling Mo seems to be possible by recovering the solution as it is.

The present invention is made based on the aforementioned knowledge. The present invention is a method for separating and purifying technetium from technetium-containing molybdenum. The method includes: dissolving technetium-containing molybdenum in a solvent so as to make a solution; passing the solution through a first column, which is loaded with an extraction chromatographic resin; cleaning the first column; and passing an acid solution through the first column so as to elute technetium from the extraction chromatographic resin for recovery after cleaning the first column.

Here, the method may further includes: adding an alkaline solution to a solution for neutralization where the solution is eluted from the extraction chromatographic resin; passing the obtained solution through a second column, which is loaded with a quadruple cross-linked anion ion-exchange resin; cleaning the second column; and passing an acid solution through the second column so as to elute technetium from the quadruple cross-linked anion ion-exchange resin for recovery after cleaning the second column.

The present invention is also a method for separating and purifying technetium from technetium-containing molybdenum. The method includes: dissolving technetium-containing molybdenum in a solvent so as to make a solution; passing the solution through a first column, which is loaded with an extraction chromatographic resin; cleaning the first column; passing an acid solution through the first column so as to elute technetium from the extraction chromatographic resin after cleaning the first column; adding an alkaline solution to a solution for neutralization where the solution is eluted from the extraction chromatographic resin; passing the obtained solution through a second column, which is loaded with a quadruple cross-linked anion ion-exchange resin; cleaning the second column; and passing an acid solution through the second column so as to elute technetium from the quadruple cross-linked anion ion-exchange resin for recovery after cleaning the second column.

Here, the solvent may be an ammonia solution with an addition of a hydrogen peroxide solution.

The extraction chromatographic resin may be TEVA (registered trademark) resin.

The method may further include: cleaning the extraction chromatographic resin with a nitric acid as a pretreatment; and passing weaker nitric acid than the nitric acid through after cleaning the extraction chromatographic resin.

The cleaning of the first column may be performed with a diluted ammonia solution, and subsequently with a nitric acid.

The acid solution to pass through the first column may be a nitric acid solution.

The alkaline solution may be a sodium hydroxide solution.

The quadruple cross-linked anion ion-exchange resin may be Dowex (registered trademark) 1x4 resin.

The quadruple cross-linked anion ion-exchange resin may be pretreated to be Cl-type.

The cleaning of the second column may be performed with ultrapure water, and subsequently with a hydrochloric acid.

The acid solution to pass through the second column may be a hydrochloric acid solution.

The present invention is also a method for recovering molybdenum from technetium-containing molybdenum. The method includes: dissolving technetium-containing molybdenum in a solvent so as to make a solution; passing the solution through a first column, which is loaded with an extraction chromatographic resin; and recovering the solution having passed through the first column so as to recover molybdenum.

Here, the method may further include: cleaning the first column, and recovering the solution used in the cleaning the first column so as to recover molybdenum.

The recovering of molybdenum may be performed with a diluted ammonia solution.

The present invention is also an apparatus for separating and purifying technetium from technetium-containing molybdenum. The apparatus includes: means for dissolving technetium-containing molybdenum in a solvent so as to make a solution; a first column that allows the solution to pass through where the first column is loaded with an extraction chromatographic resin; means for cleaning the first column; and means for allowing an acid solution to pass through the first column so as to elute technetium from the extraction chromatographic resin for recovery.

The apparatus may further include; means for adding an alkaline solution to a solution for neutralization where the solution is eluted from the extraction chromatographic resin; a second column that allows the obtained solution to pass through where the second column is loaded with a quadruple cross-linked anion ion-exchange resin; means for cleaning the second column; and means for allowing an acid solution to pass through the second column so as to elute technetium from the quadruple cross-linked anion ion-exchange resin for recovery.

The present invention is also an apparatus for separating and purifying technetium from technetium-containing molybdenum. The apparatus includes: means for dissolving technetium-containing molybdenum in a solvent so as to make a solution; a first column that allows the solution to pass through where the first column is loaded with an extraction chromatographic resin; means for cleaning the first column; and means for allowing an acid solution to pass through the first column so as to elute technetium from the extraction chromatographic resin; means for adding an alkaline solution to a solution for neutralization where the solution is eluted from the extraction chromatographic resin; a second column that allows the obtained solution to pass through where the second column is loaded with a quadruple cross-linked anion ion-exchange resin; means for cleaning the second column; and means for allowing an acid solution to pass through the second column so as to elute technetium from the quadruple cross-linked anion ion-exchange resin for recovery.

The present invention is also an apparatus for recovering molybdenum from technetium-containing molybdenum. The apparatus includes: means for dissolving technetium-containing molybdenum in a solvent so as to make a solution; a first column that allows the solution to pass through where the first column is loaded with an extraction chromatographic resin; and means for recovering the solution having passed through the first column so as to recover molybdenum.

The apparatus may further include: means for cleaning the first column, and means for recovering the solution used in the cleaning the first column so as to recover molybdenum.

EFFECTS OF THE INVENTION

The present invention can remove Mo to reduce its concentration to a sufficiently low concentration that allows administrating Tc-99m to a human being.

The present invention also can recover and recycle a target of $^{100}$Mo with a simple solvent.

Patent Document 2 discloses a technique where the column at the first stage is used for eluting Tc with a salt solution from the column on which molybdenum adsorbent is loaded. In contrast, the present invention employs the combination of two types of columns that allow molybdenum to flow out while trapping technetium, and also allow eluting the trapped technetium with a simple inorganic acid. Thus, this configuration has the different characteristic from that of the column at the first stage. The present invention uses the column at the first stage that allows the ammonium solution (which is an alkaline solution but not a salt solution) including molybdenum and technetium to pass through, allows molybdenum to flow out while trapping technetium, and directly returns the solution in a liquid form for recycling.

The column at the second stage disclosed in Patent Document 2 is used to remove molybdenum and concentrate Tc. This characteristic seems to be similar to the two types of columns used in the present invention, but differs in characteristic as follows. That is, the present invention does not employ the resin of the exemplary anion exchange column. While in Patent Document 2, technetium is eluted with the reductive-complexing agent (including EDA), the present invention employs, for ease of handling, the inorganic acid (employs a nitric acid for elution of technetium from the column at the first stage, and a hydrochloric acid for elution of technetium from the column at the second stage). Especially, the characteristic point is that the hydrochloric acid is finally used for elution of technetium from the column.

BRIEF DESCRIPTION OF THE DRAWINGS

FIG. 1 is a diagram illustrating contents of experiment by the inventors.
FIG. 2 is a table similarly illustrating separation of molybdenum powder dissolved in hydrogen peroxide solution.
FIG. 3 is a table similarly illustrating separation of molybdenum powder dissolved in hydrogen peroxide solution and ammonia solution.
FIG. 4 is a table illustrating removal of Mo using ion-exchange resin and recovery of rhenium (technetium).
FIG. 5 is a table illustrating a relationship between a recovery rate of rhenium (technetium) using Dowex 1x4 and removal of Mo.
FIG. 6 is a conduit line map illustrating an entire configuration according to an embodiment of the present invention.
FIG. 7 is a flowchart illustrating an overall procedure according to the embodiment.
FIG. 8 is a timing chart illustrating production of radioactivity-containing solution according to the embodiment.
FIG. 9 is a timing chart similarly illustrating a TEVA process.
FIG. 10 is a timing chart similarly illustrating a Dowex process.
FIG. 11 is a block diagram illustrating an extracted configuration of a part of the present invention according to the embodiment.
FIG. 12 is a flowchart similarly illustrating an outline of procedure according to the present invention.

DESCRIPTION OF PREFERRED EMBODIMENTS

Embodiments of the present invention will be described in detail below by referring to the accompanying drawings.

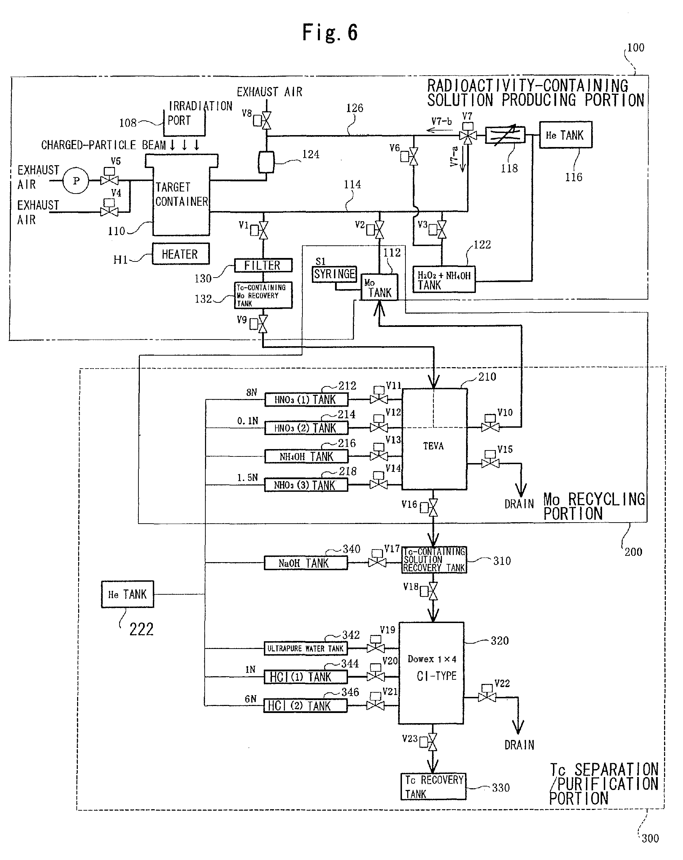

This embodiment separates and supplies Tc-99m, which is produced using $^{100}$Mo (p,2n) $^{99m}$Tc, and recycles Mo-100. The overall configuration as illustrated in FIG. 6 includes a radioactivity-containing solution producing portion 100, a Mo recycling portion 200, and a Tc separation/purification portion 300. The radioactivity-containing solution producing portion 100 produces a radioactivity-containing solution using $^{100}$Mo (p,2n) $^{99m}$Tc. The Mo recycling portion 200 is used to recycle Mo-100. The Tc separation/purification portion 300 is used to separate and purify Tc-99m.

The radioactivity-containing solution producing portion 100 includes a target container 110, a target solution (Mo) tank 112, a syringe S1, a heater H1 for heating, a He tank 116, a flow rate controller 118, a decompression pump (such as a vacuum pump) P, a solution mixture ($H_2O_2$ + $NH_4OH$) tank 122, a valve V3, a three-way diversion valve V7, a Tc-containing Mo recovery tank 132, valves V1 to V9, and pipes 114, 126, 128, and 129. The target container 110 is, for example, vertically irradiated with a charged particle (such as proton) beam from an irradiation port 108 of a particle accelerator (not shown). The target solution (Mo) tank 112 stores target material (Mo) that dissolves or suspended in a liquid (referred to as target solution). The syringe S 1 is used for pumping the target solution from the Mo tank 112 to the pipe 114 and introducing the target solution into the target container 110. The heater H 1 is used for drying the target solution inside the target container 110 until the irradiation of the proton beam becomes not affected, and reducing liquid component such that solid component is deposited. The He tank 116, the flow rate controller 118, and the decompression pump P supply inert gas for drying (also used for pressure source of liquid transportation) such as helium gas. The decompression pump P is used for vaporizing and enhancing exhaust air. The solution mixture ($H_2O_2$ + $NH_4OH$) tank 122 stores a solvent for recovery such as $H_2O_2$ + $NH_4OH$. The valve V3 is means for introducing the solvent for recovery into the target container 110 via the pipe 114 by pressure of He gas supplied from the He tank 116 after the irradiation of proton beam terminates, so as to again dissolve the target material in the solvent to make solution. The three-way diversion valve V7 selects a flow path V7-a, a flow path V7-b, and a closed path of helium gas. The Tc-containing Mo recovery tank 132 introduces the solvent for recovery to the target container 110 from the valve V6 via the pipe 126 so as to clean the target container 110, and extracts the liquid to recover the liquid without disposal. In the drawing, a reference numeral 124 denotes a solution trap that is disposed in the middle of the pipe 126, and allows overflow of the solution from the target container 110. A reference numeral 130 denotes a filter that is disposed in the middle of the recovery pipe 129 to inhibit solid content of Mo from obstructing the subsequent pipe.

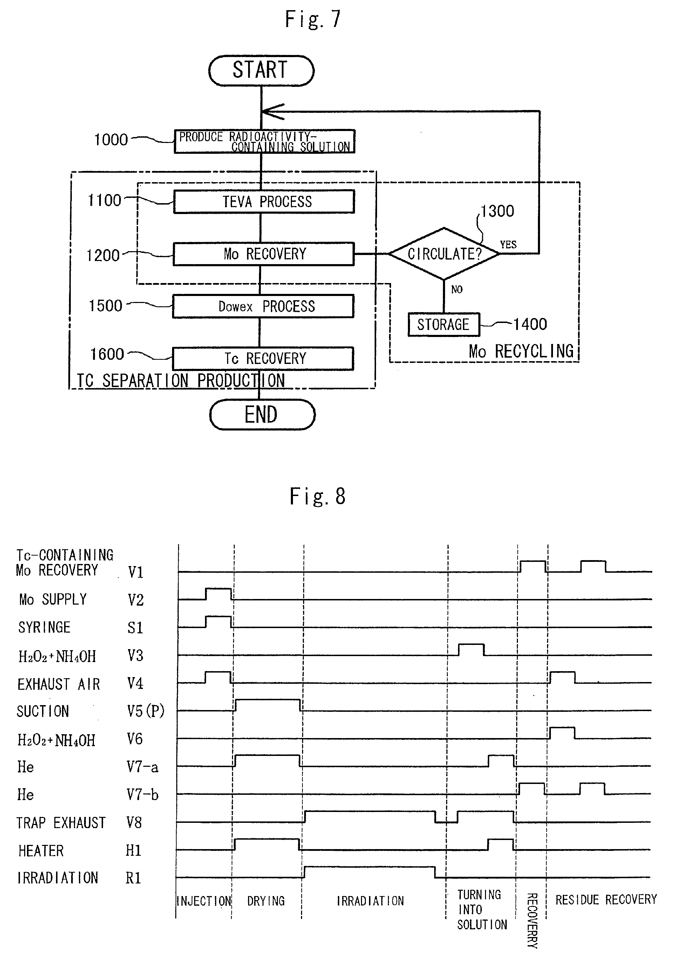

The radioactivity-containing solution producing portion 100 produces the radioactivity-containing solution at Step 1000 in the entire processes illustrated in FIG. 7.

Specifically, as illustrated in the timing chart of FIG. 8, first, the valves V2 and V4 are opened to inject the target solution to the target container 110 with the syringe S 1.

Subsequently, the valves V2 and V4 are closed, the heater H 1 heats the target container 110, and the valve V5 is opened for sucking with the pump P. Additionally, "a" side of the valve V7 is opened to introduce the He gas for drying and dry the target solution.

Subsequently, the valve V8 is opened to exhaust air via the trap 124, and perform irradiation of the proton beam from the irradiation port 108.

Subsequently, the valves V3 and V8 are opened to supply the solvent from the $H_2O_2$+ $NH_4OH$ tank 122. This "a" side of the valve V7 is then opened to supply the He gas for stirring, and the heater H1 is turned on to obtain solution.

Subsequently, the valve V1 and "b" side of the valve V7 are opened to recover Tc-containing Mo in the recovery tank 132 by He gas pressure.

Additionally, the valves V4 and V6 are opened to supply $H_2O_2$ + $NH_4OH$ to the target container 110 from the $H_2O_2$ + $NH_4OH$ tank 122, thus cleaning the target container 110. Subsequently, "a" side of the valve V7 and the valve V1 are opened to recover residue into the Tc-containing Mo recovery tank 132 by the He gas pressure.

Here, the target solution employs molybdenum solution that is obtained by dissolving molybdenum oxide (which is preferred to be $MoO_3$) in 10 to 30% ammonia solution. To enhance dissolution, 10 to 30% hydrogen peroxide solution may be added. In this case, it is preferred that solution composition be as follows.

$$25\% \text{ ammonia solution} : 30\% \text{ hydrogen peroxide solution} = 1 : 1 \text{ to } 1 : 2$$

The aforementioned target solution is introduced from a bottom portion or a side surface of the target container 110. When the solution is introduced, the pump, the syringe, and similar member may be used. The amount of solution to be introduced is preliminarily determined as an amount that allows molybdenum compound to have a thickness of 0.1 to 5 mm after crystallization. Area density of molybdenum is assumed to be equal to or more than about 450 mg/cm$^2$.

In order to dry the solution, heating with the heater H1, which is secured to an outer periphery of the target container 110, is performed. Here, a temperature is set to about 100 to 700°C, preferably, 200 to 650°C. Additionally, gas (here, helium gas) is sent to the inside of the target container so as to enhance discharge of water vapor. When the discharge of water vapor terminates, molybdic acid ammonium salt is deposited. Further, continuing heating decomposes this compound into molybdenum oxide, ammonia gas, and water. At this time, ammonia gas and water are discharged to the outside of the target container together with introduced gas. Consequently, crystal of molybdenum oxide alone is disposed on the bottom face of the target container.

The introduced gas is preferred to employ helium gas since the helium gas does not provide a nuclear reaction product when the helium gas remains inside the target container 110. Alternatively, it is preferred that hydrogen or carbon monoxide be introduced to reduce the aforementioned molybdenum oxide. This is because the crystal obtained by the reduction increases in content of molybdenum per unit volume, and this increases nuclear reaction efficiency. This consequently increases yield of Tc-99m or Mo-99 to be obtained.

As described above, the target material, which is introduced into the target container as a liquid, is prepared as solid by drying and hardening. This allows an effective irradiation.

During irradiation, the target container 110 may be a sealing type or an open type. The open type target container prevents increase in pressure caused by heat generation at irradiation. This allows irradiation without damaging the target container.

After the irradiation terminates, ammonia solution or mixed solution that is mixed with ammonia solution and hydrogen peroxide solution is introduced into the target container 110, and molybdenum oxide, which is irradiated for about 5 to 10 minutes, is redissolved. To enhance dissolution, mixing and similar process by heating and introducing gas is performed.

As liquid to be introduced, the ammonia solution with a mass concentration of 10 to 30% and the hydrogen peroxide solution with a mass concentration of 10 to 30% are assumed to be used. Their liquid measures depend on a shape of the target container. Liquid measure corresponding to 20 to 80% of the volume is introduced. With increasing solution, this increases in efficiency of dissolving and recovering Tc-99m and Mo-99, which have possibility of being attached on a wall surface of the target container in a wide range.

Subsequently, redissolution liquid of molybdenum oxide where Tc-99m or Mo-99 is dissolved is transported to the outside of the target container by a pressurized gas such as helium gas or similar gas. At this time, molybdenum oxide that is not completely dissolved in the aforementioned process may obstruct the recovery pipe. Thus, the filter 130 is disposed immediately after the target container. Removing these elements allows stabilized solution transportation. The filter 130 in the middle of this pipe may employ a commercial product with a hole diameter of equal to or more than 0.22 $\mu$m. The hole diameter is not limited insofar as the pipe is not obstructed. While filter material is preferred to employ, especially, quartz, polypropylene, or Teflon (registered trademark), the filter material is not limited.

The aforementioned Mo recycling portion 200 as illustrated in FIG. 6 includes a first column (which is also referred to as a TEVA column) 210, a first nitric acid (HNO$_3$) tank 212, a second nitric acid tank 214, an ammonia (NH$_4$OH) tank 216, a third nitric acid tank 218, a He tank 222, valves V11 to V16, and piping. The first column 210 is loaded with TEVA resin of, for example, 2 mL. The first nitric acid (HNO$_3$) tank 212 is loaded with, for example, 8 N nitric acid. The 8 N nitric acid is means for cleaning the first column 210 and recovering Tc. The second nitric acid tank 214 is loaded with, for example, 0.1 N nitric acid. The ammonia (NH$_4$OH) tank 216 is loaded with diluted ammonia solution. The third nitric acid tank 218 is loaded with 1.5 N nitric acid. The He tank 222 is loaded with helium gas for supplying liquid.

The aforementioned TEVA resin is tertiary amine according to its chemical structure, and reacts with technetium to be turned into quarternary ammonium salt, thus providing increased adsorption. The organic solvent as a tertiary amine can adsorb Tc while back extraction from the organic solvent is difficult. The TEVA resin is formed such that the tertiary amine is infiltrated into a silica base, and can be used in the same manner as solid phase extraction, which is preferred.

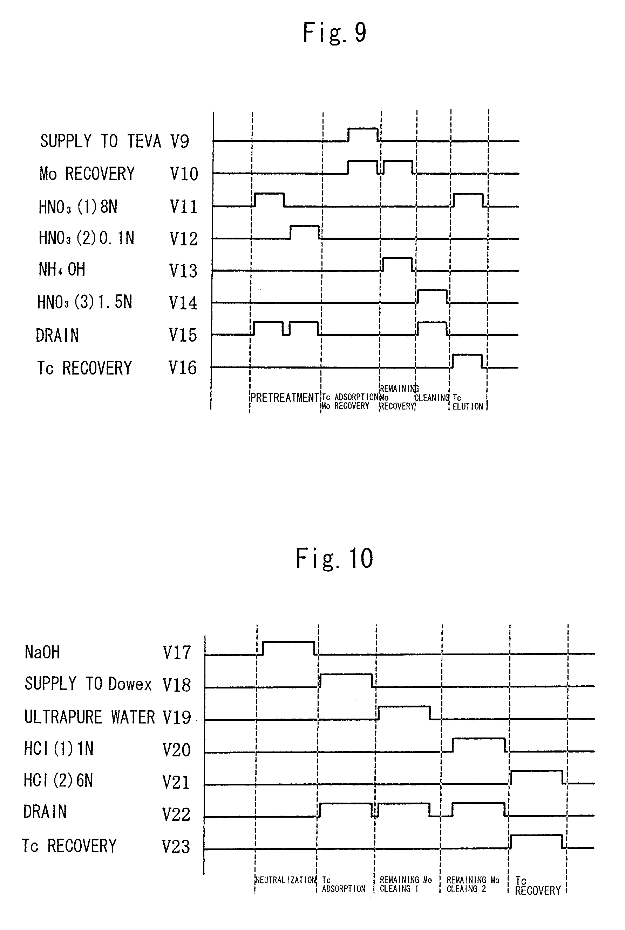

As illustrated in FIG. 7, the Mo recycling portion 200 performs the TEVA process at Step 1100, Mo recovery at Step 1200, circulation determination at Step 1300, and storage at Step 1400. Specifically, as illustrated in FIG. 9, first, the valves V11 and V15 are opened to supply 8 N nitric acid to the TEVA column 210 from the first nitric acid tank 212 and dispose it from a drain. Subsequently, the valves V12 and V15 are opened to supply 0.1 N nitric acid to the column 210 from the second nitric acid tank 214 and dispose it from the drain. Thus, pretreatment is performed. Here, cleaning with 8 N nitric acid is performed to preliminarily eliminate substance, which may be generated by reaction of the final solution and 8 N nitric acid, since 8 N nitric acid finally flows. Also, flowing 0.1N nitric acid is performed to prevent intense neutralization when the target solution, which includes an alkaline mixed solution of ammonia solution and hydrogen peroxide solution, flows next time.

Subsequently, the valves V9 and V10 are opened to supply the TEVA column 210 with Tc-containing Mo solution inside the Tc-containing Mo recovery tank 132 of the radioactivity-containing solution producing portion 100 and recover Mo into the Mo tank 112. At this time, a water passage rate may be set to, for example, 1 to 2 mL/min.

Subsequently, the valves V13 and V10 are opened to supply diluted NH$_4$OH (approximately 0.01 to 1%) of about 4 mL and similarly recover Mo into the Mo tank 112. At this time, a water passage rate may be set to, for example, 2 mL/min.

The solution recovered with the diluted NH$_4$OH is mixed with Mo solution recovered in advance, and used for recovery of Mo and recycling. Here, cleaning with the diluted ammonia solution may be performed with ultrapure water. In this case, next cleaning with 1.5 N nitric acid may be omitted. An object of 1.5 N nitric acid is to maximally remove Mo with the TEVA column. If the next process is a process with Dowex 1x4, cleaning with 1.5 N nitric acid may be omitted.

Subsequently, the valves V14 and V15 are opened to flow 1.5 N nitric acid of, for example, 4 mL from the third nitric acid tank 218 for cleaning and disposing. At this time, a water passage rate may be set to, for example, 2 mL/min. If a removal rate of Mo may slightly decrease, even 0.1 to 0.5 N nitric acid provides cleaning effect. In contrast, 1.5 N sulfuric acid can remove trace of Mo remaining in the column well in spite of its small liquid measure.

Subsequently, the valves V 11 and V 16 are opened to flow 8 N nitric acid of, for example, of 6 mL from the first nitric acid tank 212. Then, technetium is eluted from the TEVA resin to recover the technetium into the Tc-containing solution recovery tank 310. At this time, a water passage rate may be set to, for example, 1 to 2 mL/min. Here, the 8 N nitric acid to be used has an appropriate concentration/amount for recovering most of Tc in a small liquid measure, and further for neutralizing with sodium hydroxide such that the amount of solution does not increase dramatically.

In this embodiment, a recovery rate of technetium was equal to or more than 99% while a survival rate of Mo was less than 0.1%.

As illustrated in FIG. 6, the Tc separation/purification portion 300 includes the TEVA column 210 of the Mo recycling portion 200, the tanks 212, 214, 216, 218, and 222, the valves V11 to V16, the tank 310, a second column (which is referred to as a Dowex column) 320, a Tc recovery tank 330, a NaOH tank 340, an ultrapure water tank 342, a first hydrochloric acid (HCl) tank 344, a second hydrochloric acid tank 346, valves V17 to V23, and piping. The tank 310 recovers the Tc-containing solution supplied from the TEVA column 210 of the Mo recycling portion 200 via the valve V16. The second column 320 is loaded with Dowex 1x4 of, for example, 0.75 mL. The NaOH tank 340 is means for neutralizing solution eluted from the first column 210, and loaded with the sodium hydroxide NaOH. The ultrapure water tank 342 is means for cleaning the second column 320, and loaded with ultrapure water. The first hydrochloric acid (HCl) tank 344 is loaded with 1 N hydrochloric acid. The second hydrochloric acid tank 346 is loaded with 6 N hydrochloric acid to recover Tc from the second column 320.

The Dowex 1x4 is strong-base anion-exchange resin, thus strongly adsorbing anion of technetium. The Dowex 1x4 to be used here is preferred to be Cl-type by a preliminary processing. The Cl-type Dowex 1x4 is easier to be adjusted than an OH-type Dowex 1x4.

As illustrated in FIG. 7, the Tc separation/purification portion 300 performs the TEVA process at Step 1100 and the Mo recovery at Step 1200, and further performs a Dowex process at Step 1500 and a Tc recovery at Step 1600. Specifically, as illustrated in FIG. 10 in detail, first, the valve V17 is opened to supply, for example, 8 N NaOH in the NaOH tank 340 of, for example, 6 mL into the Tc-containing solution recovery tank 310 for neutralization. At this time, water-cooling is needed due to heat of neutralization. Here, 8 N sodium hydroxide is used. While the normality is decreased, the liquid measure to be neutralized increases. This takes more time for the separation. Sodium hydroxide is used for this neutralization, which is slightly alkaline.

Subsequently, the valves V18 and V22 are opened to supply the Tc-containing solution inside the tank 310 with the Dowex column 320, thus making Tc adsorbed and disposing it from a drain. At this time, a water passage rate may be set to, for example, 1 to 2 mL/min.

Subsequently, the valves V 19 and V22 are opened to supply ultrapure water of, for example, 5 mL from the ultrapure water tank 342 at a water passage rate of 1 to 2 mL/min so as to clean the remaining Mo in the Dowex column 320. The cleaning fluid is disposed. Here, the ultrapure water is used to allow hydrochloric acid to continuously flow in. Cleaning the alkaline column with pure water prevents change in a state such as heat of neutralization generated by flowing hydrochloric acid into the column.

Subsequently, the valves V20 and V22 are opened to supply 1 N hydrochloric acid of, for example, 5 mL (at a water passage rate of 2 mL/min) in the first hydrochloric acid tank 344 to clean the remaining Mo in the Dowex column 320. The cleaning fluid is disposed. This is performed to remove Mo eluted from the column by a hydrochloric acid process before allowing subsequent 6 N hydrochloric acid to flow in. If mixing of some Mo is accepted, cleaning with 1 N hydrochloric acid may be omitted.

Subsequently, the valves V21 and V23 are opened to supply 6 N hydrochloric acid of, for example, 20 mL (at a water passage rate of 2 mL/min) from the second hydrochloric acid tank 346 to elute Tc from the Dowex1x4 resin and recover Tc into the Tc recovery tank 330. Increasing the normality compared with that of 6 N hydrochloric acid rather reduces the recovery rate than increases the recovery rate. In contrast, the normality lower than this needs a larger amount of solution to recover Tc.

In this embodiment, the recovery rate of Tc, which is generated in the target container 110, to the tank 330 was 85 to 88%, the remaining amount of Mo in the tank 330 was equal to or less than 1 $\mu$g. The obtained hydrochloric acid solution is supplied after being concentrated by distillation and then neutralized, or after being neutralized and then diluted. This can reduce concentration of the hydrochloric acid solution below the upper concentration limit, which is 2.5 ppm, of Mo for parenteral administration described in guideline of EMEA/CHMP/SWP/4446/2000 issued on 21 February in 2008 by European Medicines Agency (EMA) even if a total amount of solution finally becomes 0.5 mL.

In this embodiment, the Dowex column 320 elutes Tc with 6 N hydrochloric acid. Cleaning the column with pure water regenerates the Dowex column 320 as a Cl-type column. This saves labor on operations when the column is recycled.

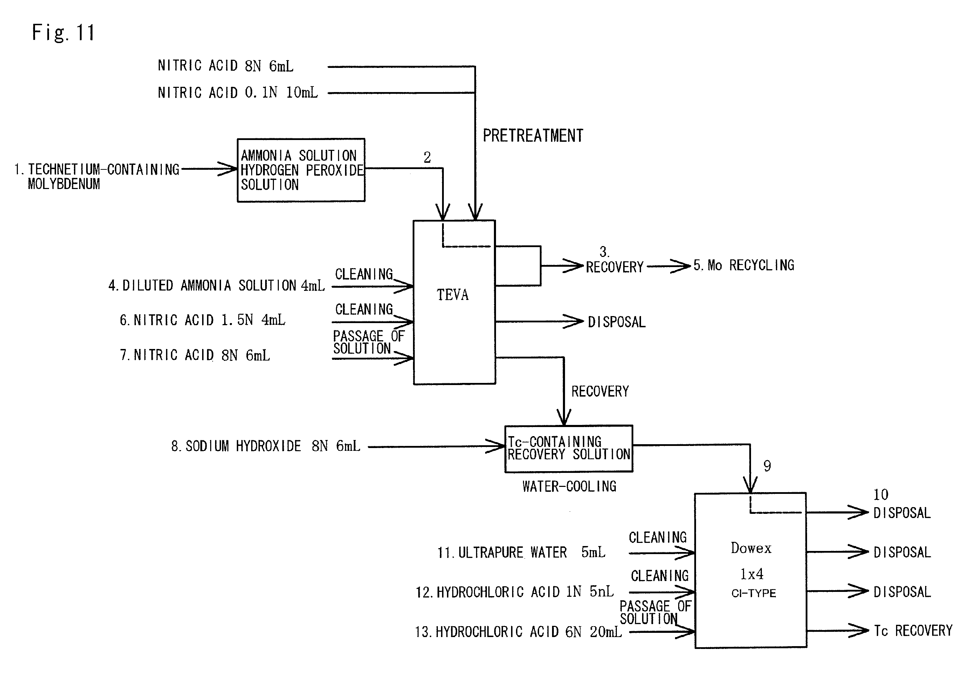

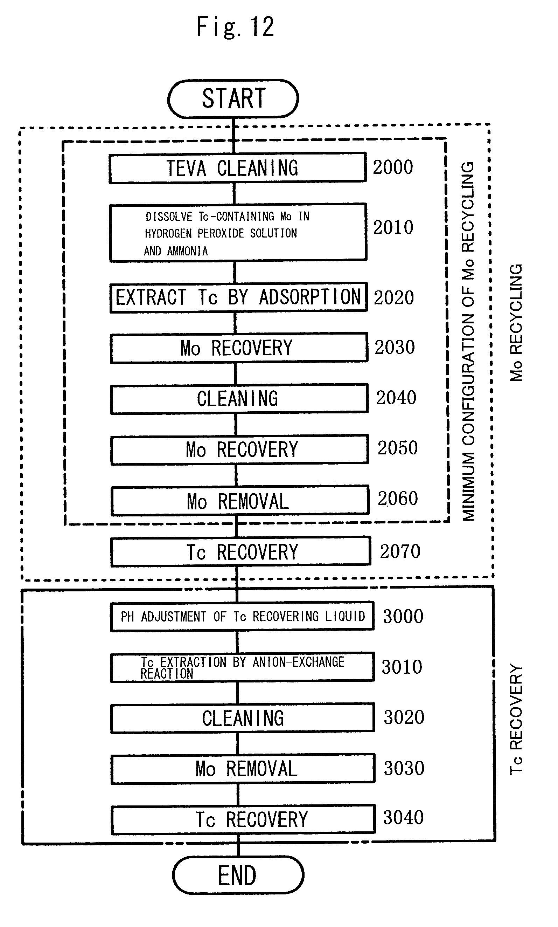

FIG. 11 illustrates an extracted part of the present invention according to the embodiment. Solution is introduced to TEVA in 2 to clean the column with pure water. The recovery in 3 transports both of them to recycling, and recovers Tc remaining in the column with 8 N nitric acid. In the anion ion-exchange resin (Dowex 1x4), the Tc-containing recovery solution, which is adjusted to be slightly alkaline, is introduced. Then, the column is cleaned with pure water, and Tc is recovered with 6 N hydrochloric acid. This is the minimum configuration. FIG. 12 illustrates an extracted procedure corresponding to this configuration.

In the aforementioned embodiment, the technetium-containing Mo (Mo-99) is produced by the radioactivity-containing solution producing portion 100 in FIG. 6, and obtained such that the particle accelerator makes the charged particle directly collide with the target material (Mo-100). While the present invention is applied to the separation of technetium from the above-described technetium-containing Mo (Mo-99) and recovery of molybdenum, the application target of the present invention is not limited to this. Similarly, the present invention may be applicable to separation of technetium from Tc-containing Mo (Mo-99) and recovery of Mo where technetium and Mo are produced by other methods. The other methods include: a method for obtaining a target nuclide (Mo-99) such that the particle accelerator makes the charged particle collide with a neutron target material (Mo-98 or Mo-100) such as beryllium (Be), a method for obtaining a target nuclide (Mo-99) such that a neutron generated inside a nuclear reactor collides with uranium (U-235), thus providing the target nuclide as a fission product, a method for obtaining a target nuclide (Mo-99) such that an electron at approximately 60 MeV collides with a target material (Mo-100), and a similar method. In the case where the technetium-containing Mo produced by the radioactivity-containing solution producing portion 100 is not used, Tc-containing Mo is preliminarily dissolved in hydrogen peroxide solution and ammonia.

The resin loaded on the first column 210 is not limited to TEVA. The resin loaded on the second column 320 is not also limited to Dowex 1x4.

The tank storing the same material such as helium tanks 116 and 222, $HNO_3$ tanks 212, 214, and 218, HCl tanks 344 and 346 are not needed to be separated, and may be shared. The diluted amount may be adjusted to a specific concentration as needed.

INDUSTRIAL APPLICABILITY

The present invention allows, for example, supplying Tc-99m alone separated from target material, which is turned into a solution, using a combination of ion-exchange resin and appropriate cleaning and recovery solutions after production using $^{100}Mo(p,2n)^{99m}Tc$.

DESCRIPTION OF REFERENCE SIGNS

| | |
|---|---|
| 110 | radioactivity-containing solution producing portion |
| 112 | target solution (Mo) tank |
| 122 | solvent mixture ($H_2O_2$+$NH_4OH$) tank |
| 132 | technetium (Tc)-containing molybdenum (Mo) recovery tank |
| 100 | radioactivity-containing solution producing portion |
| 200 | molybdenum (Mo) recycling portion |
| 210 | first column (TEVA column) |
| 212, 214, and 218 | nitric acid ($HNO_3$) tank |
| 216 | ammonia solution ($NH_4OH$) tank |
| 300 | technetium (Tc) separation/purification portion |
| 310 | technetium (Tc)-containing solution recovery tank |
| 320 | second column (Dowex column) |
| 330 | technetium (Tc) recovery tank |
| 340 | sodium hydroxide (NaOH) tank |
| 342 | ultrapure water tank |
| 344 and 346 | hydrochloric acid (HCl) tank |

**Claims**

1. A method for separating and purifying technetium from technetium-containing molybdenum, comprising:

   dissolving technetium-containing molybdenum in a solvent so as to make a solution;
   passing the solution through a first column, the first column being loaded with an extraction chromatographic resin;
   cleaning the first column; and
   passing an acid solution through the first column so as to elute technetium from the extraction chromatographic resin for recovery after cleaning the first column.

2. The method for separating and purifying technetium from technetium-containing molybdenum according to claim 1, further comprising:

   adding an alkaline solution to a solution for neutralization, the solution being eluted from the extraction chromatographic resin;
   passing the obtained solution through a second column, the second column being loaded with a quadruple cross-linked anion ion-exchange resin;
   cleaning the second column; and
   passing an acid solution through the second column so as to elute technetium from the quadruple cross-linked anion ion-exchange resin for recovery after cleaning the second column.

3. A method for separating and purifying technetium from technetium-containing molybdenum, comprising:

   dissolving technetium-containing molybdenum in a solvent so as to make a solution;
   passing the solution through a first column, the first column being loaded with an extraction chromatographic resin;
   cleaning the first column;
   passing an acid solution through the first column so as to elute technetium from the extraction chromatographic resin after cleaning the first column;
   adding an alkaline solution to a solution for neutralization, the solution being eluted from the extraction chromatographic resin;
   passing the obtained solution through a second column, the second column being loaded with a quadruple cross-linked anion ion-exchange resin;
   cleaning the second column; and
   passing an acid solution through the second column so as to elute technetium from the quadruple cross-linked anion ion-exchange resin for recovery after cleaning the second column.

4. The method for separating and purifying technetium from technetium-containing molybdenum according to any one of claims 1 to 3, wherein
   the solvent is an ammonia solution with an addition of a hydrogen peroxide solution.

5. The method for separating and purifying technetium from technetium-containing molybdenum according to any one of claims 1 to 3, wherein
   the extraction chromatographic resin is TEVA (registered trademark) resin.

6. The method for separating and purifying technetium from technetium-containing molybdenum according to claim 5, further comprising:

   cleaning the extraction chromatographic resin with a nitric acid as a pretreatment; and
   passing weaker nitric acid than the nitric acid through after cleaning the extraction chromatographic resin.

7. The method for separating and purifying technetium from technetium-containing molybdenum according to claim 1 or 3, wherein
   the cleaning of the first column is performed with a diluted ammonia solution, and subsequently with a nitric acid.

8. The method for separating and purifying technetium from technetium-containing molybdenum according to claim 1 or 3, wherein

the acid solution to pass through the first column is a nitric acid solution.

9. The method for separating and purifying technetium from technetium-containing molybdenum according to claim 2 or 3, wherein
the alkaline solution is a sodium hydroxide solution.

10. The method for separating and purifying technetium from technetium-containing molybdenum according to claim 2 or 3, wherein
the quadruple cross-linked anion ion-exchange resin is Dowex (registered trademark) 1 x4 resin.

11. The method for separating and purifying technetium from technetium-containing molybdenum according to claim 10, wherein
the quadruple cross-linked anion ion-exchange resin is pretreated to be Cl-type.

12. The method for separating and purifying technetium from technetium-containing molybdenum according to claim 2 or 3, wherein
the cleaning of the second column is performed with ultrapure water, and subsequently with a hydrochloric acid.

13. The method for separating and purifying technetium from technetium-containing molybdenum according to claim 2 or 3, wherein
the acid solution to pass through the second column is a hydrochloric acid solution.

14. A method for recovering molybdenum from technetium-containing molybdenum, comprising:

dissolving technetium-containing molybdenum in a solvent so as to make a solution;
passing the solution through a first column, the first column being loaded with an extraction chromatographic resin; and
recovering the solution having passed through the first column so as to recover molybdenum.

15. The method for recovering molybdenum from technetium-containing molybdenum according to claim 14, further comprising:

cleaning the first column; and
recovering the solution used in the cleaning the first column so as to recover molybdenum.

16. The method for recovering molybdenum from technetium-containing molybdenum according to claim 14 or 15, wherein
the recovering of molybdenum is performed with a diluted ammonia solution.

17. An apparatus for separating and purifying technetium from technetium-containing molybdenum, comprising:

means for dissolving technetium-containing molybdenum in a solvent so as to make a solution;
a first column that passes the solution through a first column, the first column being loaded with an extraction chromatographic resin;
means for cleaning the first column; and
means for passing an acid solution through the first column so as to elute technetium from the extraction chromatographic resin for recovery.

18. The apparatus for separating and purifying technetium from technetium-containing molybdenum according to claim 17, further comprising;
means for adding an alkaline solution to a solution for neutralization, the solution being eluted from the extraction chromatographic resin;
a second column that allows the obtained solution to pass through, the second column being loaded with a quadruple cross-linked anion ion-exchange resin;
means for cleaning the second column; and
means for passing an acid solution through the second column so as to elute technetium from the quadruple cross-linked anion ion-exchange resin for recovery

**19.** An apparatus for separating and purifying technetium from technetium-containing molybdenum, comprising:

means for dissolving technetium-containing molybdenum in a solvent so as to make a solution;
a first column that allows the solution to pass through, the first column being loaded with an extraction chromatographic resin;
means for cleaning the first column;
means for passing an acid solution through the first column so as to elute technetium from the extraction chromatographic resin;
means for adding an alkaline solution to a solution for neutralization, the solution being eluted from the extraction chromatographic resin;
a second column that allows the obtained solution to pass through, the second column being loaded with a quadruple cross-linked anion ion-exchange resin;
means for cleaning the second column; and
means for passing an acid solution through the second column so as to elute technetium from the quadruple cross-linked anion ion-exchange resin for recovery.

**20.** An apparatus for recovering molybdenum from technetium-containing molybdenum, comprising:

means for dissolving technetium-containing molybdenum in a solvent so as to make a solution;
a first column that allows the solution to pass through, the first column being loaded with an extraction chromatographic resin; and
means for recovering the solution having passed through the first column so as to recover molybdenum.

**21.** The apparatus for recovering molybdenum from technetium-containing molybdenum according to claim 20, further comprising:

means for cleaning the first column; and
means for recovering the solution used in the cleaning the first column so as to recover molybdenum.

Fig. 1

Mo POWDER (ca. 500 mg)

$+ H_2O_2 + NH_4OH$ FOR DISSOLUTION

TEVA RESIN

+ DILUTED $NH_4OH$
CLEAN WITH 1.5N HNO$_3$

+ 8N $HNO_3$ TO SEPARATE Re
+ 8N NaOH FOR NEUTRALIZATION

Dowex 1x4 RESIN

+ WATER
CLEAN WITH 1N HCl

+ 6N HCl TO SEPARATE Re

RECOVER Re

Fig. 2

| SOLUTION TO INTRODUCE INTO COLUMN | MOLYBDENUM (%) | | | RHENIUM (%) |
|---|---|---|---|---|
| | CLEANING FLUID: 0.5N NITRIC ACID | CLEANING FLUID: 1.0N NITRIC ACID | CLEANING FLUID 1.5N NITRIC ACID | |
| SAMPLE SOLUTION | **24** | **24** | **24** | **0** |
| CLEANING FLUID-1, 8mL | 60 | 69 | 73 | 0 |
| CLEANING FLUID-2, 8mL | 15 | 5 | 2 | 0 |
| CLEANING FLUID-3, 8mL | 3 | 0 | 0 | 3 |
| 8N NITRIC ACID, 4mL | 1 | 0 | 0 | 94 |
| 8N NITRIC ACID, 4mL | 0 | 0 | 0 | 3 |

EP 2 620 950 A1

Fig. 3

| SOLUTION TO INTRODUCE INTO COLUMN | MOLYBDENUM Mo (%) | RHENIUM Re (%) | TECHNETIUM -99m, Tc (%) |
|---|---|---|---|
| SAMPLE SOLUTION | 92-95 | 0 | 0 |
| DILUTED AMMONIA SOLUTION, 4mL | 4-7 | 0 | 0 |
| 1.5N NITRIC ACID, 4mL | 0-1 | 0-2 | 0 |
| 8N NITRIC ACID, 5mL (6mL IN CASE OF Tc) | <0.1 | >99 | >99 |

TO BE RECOVERED AND RECYCLED

EP 2 620 950 A1

Fig. 4

| | NOBIAS PA-1 (CATION-EXCHANGE RESIN) | | Dowex 2×8 (ANION ION-EXCHANGE RESIN) | | Dowex 1×4 (ANION ION-EXCHANGE RESIN) | |
|---|---|---|---|---|---|---|
| | Mo | Re | Mo | Re | Mo | Re |
| Test-1 PASSAGE RATE OF 8N NITRIC ACID ELUENT, 3mL | 80 | 70 CAN NOT BE SEPARATED | No data | No data | No data | No data |
| Test-2 PASSAGE AFTER DILUTED TO 1N NITRIC ACID SOLUTION, 30mL | | | 95 | 4-7 | 95 | 18 |
| 0.1N NITRIC ACID CLEANING, 2mL | | | 4 | 1 | 4 | 3 |
| 8N NITRIC ACID ELUENT, 10mL | | | 1 | 91-92 | 1 | 78 |
| Test-3 PASSAGE RATE AFTER DILUTED TO 1N NITRIC ACID SOLUTION, 20mL | | | 93 | 2 | 93 | 7 |
| 0.1N NITRIC ACID CLEANING, 2mL | | | 6 | 0 | 6 | 2 |
| 6N HYDROCHLORIC ACID ELUENT, 10mL | | | 1 | 43 | 0 | 91 |

EP 2 620 950 A1

Fig. 5

| | Mo | Re | Tc |
|---|---|---|---|
| NEUTRALIZATION WITH 8N NITRIC ACID + 8N SODIUM HYDROXIDE (ALKALINE) | 93-99 | 30-36 | 1 |
| PURE WATER CLEANING, 5mL | 0-3 | 1-2 | 0 |
| 1N HYDROCHLORIC ACID CLEANING, 5mL | 0 | 3-4 | 0 |
| ELUTION WITH 6N HYDROCHLORIC ACID, 20mL | <0.4 | 57-63 | 85-88 |
| CHANGE 6N HYDROCHLORIC ACID TO 9N HYDROCHLORIC ACID | No data | No data | 52 |

EP 2 620 950 A1

# Fig. 6

## Fig. 7

## Fig. 8

# Fig. 9

| | |
|---|---|
| SUPPLY TO TEVA | V9 |
| Mo RECOVERY | V10 |
| HNO₃ (1) 8N | V11 |
| HNO₃ (2) 0. 1N | V12 |
| NH₄ OH | V13 |
| HNO₃ (3) 1. 5N | V14 |
| DRAIN | V15 |
| Tc RECOVERY | V16 |

PRETREATMENT | Tc ADSORPTION Mo RECOVERY | Mo RECOVERY | REMAINING CLEANING | Tc ELUTION

# Fig. 10

| | |
|---|---|
| NaOH | V17 |
| SUPPLY TO Dowex | V18 |
| ULTRAPURE WATER | V19 |
| HCl (1) 1N | V20 |
| HCl (2) 6N | V21 |
| DRAIN | V22 |
| Tc RECOVERY | V23 |

NEUTRALIZATION | Tc ADSORPTION | REMAINING Mo CLEAING 1 | REMAINING Mo CLEANING 2 | Tc RECOVERY

Fig.11

NITRIC ACID 8N 6mL

NITRIC ACID 0.1N 10mL

PRETREATMENT

1. TECHNETIUM-CONTAINING MOLYBDENUM

AMMONIA SOLUTION HYDROGEN PEROXIDE SOLUTION

2

3. RECOVERY ──► 5. Mo RECYCLING

4. DILUTED AMMONIA SOLUTION 4mL

CLEANING

6. NITRIC ACID 1.5N 4mL

CLEANING

7. NITRIC ACID 8N 6mL

PASSAGE OF SOLUTION

TEVA

DISPOSAL

RECOVERY

8. SODIUM HYDROXIDE 8N 6mL

Tc-CONTAINING RECOVERY SOLUTION

9

WATER-COOLING

10 DISPOSAL

11. ULTRAPURE WATER 5mL

CLEANING

12. HYDROCHLORIC ACID 1N 5nL

CLEANING

13. HYDROCHLORIC ACID 6N 20mL

PASSAGE OF SOLUTION

Dowex

1x4

CI-TYPE

DISPOSAL

DISPOSAL

Tc RECOVERY

EP 2 620 950 A1

# Fig. 12

```
                    ( START )
```

**Mo RECYCLING**

**MINIMUM CONFIGURATION OF Mo RECYCLING**

| TEVA CLEANING | 2000 |
| DISSOLVE Tc-CONTAINING Mo IN HYDROGEN PEROXIDE SOLUTION AND AMMONIA | 2010 |
| EXTRACT Tc BY ADSORPTION | 2020 |
| Mo RECOVERY | 2030 |
| CLEANING | 2040 |
| Mo RECOVERY | 2050 |
| Mo REMOVAL | 2060 |
| Tc RECOVERY | 2070 |

**Tc RECOVERY**

| PH ADJUSTMENT OF Tc RECOVERING LIQUID | 3000 |
| Tc EXTRACTION BY ANION-EXCHANGE REACTION | 3010 |
| CLEANING | 3020 |
| Mo REMOVAL | 3030 |
| Tc RECOVERY | 3040 |

```
                    (  END  )
```

| **INTERNATIONAL SEARCH REPORT** | International application No. |
|---|---|
| | PCT/JP2010/066434 |

A. CLASSIFICATION OF SUBJECT MATTER
*G21G4/08*(2006.01)i, *B01D15/00*(2006.01)i, *B01J41/04*(2006.01)i, *B01J49/00* (2006.01)i

According to International Patent Classification (IPC) or to both national classification and IPC

B. FIELDS SEARCHED

Minimum documentation searched (classification system followed by classification symbols)
G21G4/08, B01D15/00, B01J41/04, B01J49/00

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)
JSTPlus(JDreamII), JST7580(JDreamII)

C. DOCUMENTS CONSIDERED TO BE RELEVANT

| Category* | Citation of document, with indication, where appropriate, of the relevant passages | Relevant to claim No. |
|---|---|---|
| Y | JP 2005-500518 A  (PG Research Foundation, Inc.), | 1,14-15,17, 19-21 |
| A | 06 January 2005 (06.01.2005), paragraphs [0121] to [0124] | 2-13,16,18 |
| Y | JP 6-507714 A  (Martin Marietta Energy Systems, Inc.), | 1,14-15,17, 19-21 |
| A | 01 September 1994 (01.09.1994), page 6, upper right column | 2-13,16,18 |
| A | Sankha Chattopadhyay et al, "Recovery of 99mTc from Na2[99Mo]Mo4 solution obtained from reactor-produced (n,γ)99Mo using a tiny Dowex-1 column in tandem with a small alumina column", Applied Radiation and Isotopes, 2008, 66, 1814-1817 | 1-21 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 October, 2010 (12.10.10) | 19 October, 2010 (19.10.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2"><b>INTERNATIONAL SEARCH REPORT</b><br>Information on patent family members</td><td>International application No.<br>PCT/JP2010/066434</td></tr>
</table>

```
JP 2005-500518 A        2005.01.06        JP 2005-500518 A
                                          JP 2004-534225 A
                                          JP 2006-500553 A
                                          US 2003/0012715 A1
                                          US 2003/0194364 A1
                                          US 2004/0062695 A1
                                          EP 1404616 A
                                          EP 1404430 A
                                          EP 1499412 A
                                          WO 2003/000376 A1
                                          WO 2003/000593 A1
                                          WO 2003/000376 B
                                          WO 2003/086569 A1
                                          DE 60232658 D
                                          CA 2451676 A
                                          CA 2451156 A
                                          CN 1555285 A
                                          CN 1547555 A
                                          EA 5715 B
                                          EA 5735 B
                                          ZA 200309404 A
                                          ZA 200309830 A
                                          AT 433947 T
                                          CA 2482294 A
                                          CN 1658938 A
                                          AU 2003230886 B

JP 6-507714 A           1994.09.01        JP 9-211197 A
                                          US 5186913 A
                                          US 5275802 A
                                          EP 606212 A
                                          WO 1992/019541 A1
                                          AU 663716 B
                                          AU 2004492 A
                                          CA 2105558 A
                                          CA 2105558 A1
```

Form PCT/ISA/210 (patent family annex) (July 2009)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- JP 2006500553 T
- JP 2002527031 T

## Non-patent literature cited in the description

- **UCHIDA ; TAGAMI ; FUJIKAWA.** A Fundamental Study for the Chemical Separation of Technetium by TEVA - Spec Resin. *Radioisotopes,* 1966, vol. 45, 784-787
- **S. UCHIDA ; K. TAGAMI.** A Rapid Separation Method for Determination of Tc-99 in Environmental Waters by ICP-MS. *Radioactivity and Radiochemistry,* 1999, vol. 10 (2), 23-29
- **K. TAGAMI ; S. UCHIDA.** Comparison of the TEVA - Spec resin and liquid-liquid extraction methods for the separation of technetium in soil samples. *Journal of Radioanalytical and Nuclear Chemistry,* 1999, vol. 239, 643-648
- **K. TAGAMI.** Study on analysis of Tc-99 in environmental samples and understanding environmental behavior. *Radiochemistry News,* 29 August 2003, vol. 8, 3-8
- **K. TAGAMI ; S. UCHIDA.** Separation of rhenium by an extraction chromatographic resin for determination by inductively coupled plasma-mass spectrometry. *Analytica Chimica Acta,* 2000, vol. 405, 227-229